# EUROPEAN PATENT SPECIFICATION

(11) **EP 2 136 228 B1**
(45) Date of publication and mention of the grant of the patent: **10.09.2014**
(21) Application number: 09157628.0
(22) Date of filing: 08.04.2009
(51) Int. Cl.: G02B 6/43, G02B 6/125, G02B 6/138

(54) **Manufacturing method of optical waveguide module**
Herstellungsverfahren für ein Lichtwellenleitermodul
Procédé de fabrication de module de guide d'ondes optique

(30) Priority: 17.04.2008 JP 2008107765
(43) Date of publication of application: 23.12.2009
(73) Proprietor: Nitto Denko Corporation, Ibaraki-shi Osaka 567-8680 (JP)
(72) Inventor: Shimizu, Yusuke, Osaka Ibaraki 567-8680 (JP)
(74) Representative: Isarpatent

(56) References cited:
- EP-A- 1 811 823
- JP-A- 2001 272 565
- JP-A- 2003 207 661
- US-A1- 2004 120 672

## Description

### BACKGROUND OF THE INVENTION

### 1. Field of the Invention

The present invention relates to a method of manufacturing an optical waveguide module for widespread use in optical communications, optical information processing, and other general optics.

### 2. Description of the Related Art

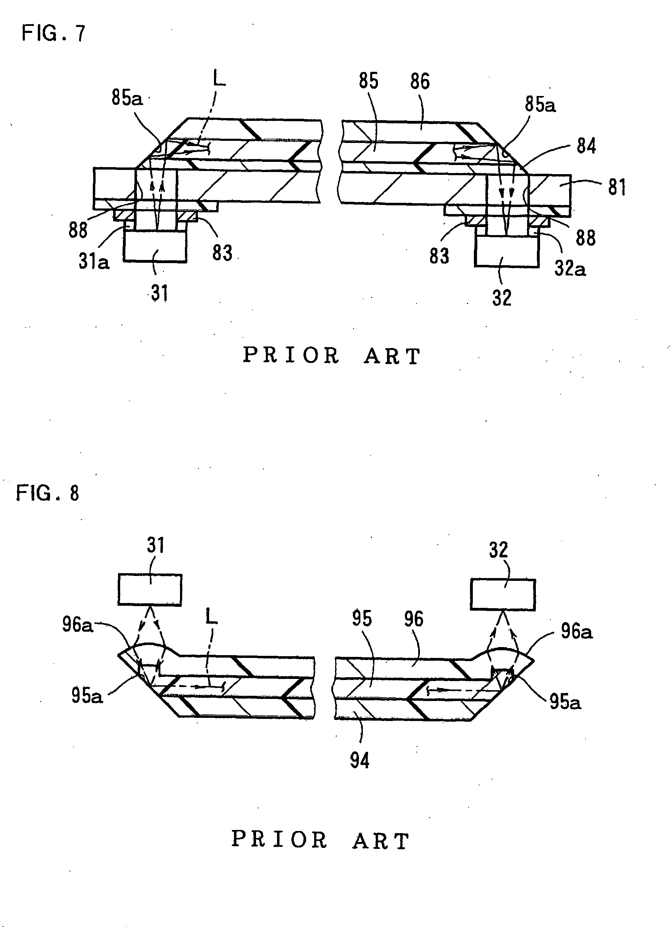

An optical waveguide module includes, for example, a substrate 81, an optical waveguide formed on the front surface of this substrate 81 and including an under cladding layer 84, a core 85 and an over cladding layer 86, and a light-emitting element 31 and a light-receiving element 32 both mounted on the back surface of the above-mentioned substrate 81, as shown in Fig. 7. Electrical interconnect lines 83 are connected to electrodes 31a and 32a of the light-emitting element 31 and the light-receiving element 32, respectively. The above-mentioned substrate 81 has through holes 88 serving as optical paths and formed over the light-emitting element 31 and over the light-receiving element 32, respectively, and opposite end portions of the optical waveguide are positioned over both of the through holes 88, respectively, so that light beams (an optical signal) L from the light-emitting element 31 are propagated through the optical waveguide to the light-receiving element 32. Each of the opposite end portions of the optical waveguide is formed to define an inclined surface inclined at 45 degrees to an optical axis, and a portion of the inclined surface corresponding to the core 85 is formed to serve as an optical path conversion mirror 85a (see, for example, Japanese Patent Application Laid-Open No. 2007-4043 (paragraphs [0096] to [0100] and Figs. 25, 26, 32

and 34) (Patent Document 1)).

The propagation of the light beams L in the above-mentioned optical waveguide module is as follows. First, the light beams L are emitted upwardly from the light-emitting element 31. The light beams L pass through one of the through holes 88 of the above-mentioned substrate 81 and then through the under cladding layer 84 in a first end portion (a left-hand end portion in Fig. 7) of the optical waveguide, and enter a first end portion of the core 85. Subsequently, the light beams L are reflected from the optical path conversion mirror 85a provided in the first end portion of the core 85 (or the optical path is changed by 90 degrees) and are guided to the interior of the core 85. Then, the light beams L are propagated in the core 85 to a second end portion (a right-hand end portion in Fig. 7) of the core 85. Subsequently, the light beams L are reflected downwardly from the optical path conversion mirror 85a provided in the above-mentioned second end portion (or the optical path is changed by 90 degrees), pass through the under cladding layer 84, and are emitted from the optical waveguide. Then, the light beams L pass through the other through hole 88 of the above-mentioned substrate 81, and are then propagated to the light-receiving element 32.

To reduce the coupling loss of the light beams L between the optical waveguide and the light-emitting element 31 or the light-receiving element 32, it has been proposed, as shown in Fig. 8, that surface portions of an over cladding layer 96 corresponding to optical path conversion mirrors 95a provided in the opposite end portions of the optical waveguide are provided in the form of convex lens portions 96a (see, for example, Japanese Patent Application Laid-Open No. 2003-172837 (Patent Document 2) and Japanese Patent Application Laid-Open No. 2006-154335 (Patent Document 3)). Specifically, in a first end portion of the optical waveguide, the light beams L emitted from the light-emitting element 31 are converged by a corresponding one of the above-mentioned convex lens portions 96a, and are guided to the optical path conversion mirror 95a provided in a first end portion of a core 95 while being converged. In a second end portion of the optical waveguide, the light beams reflected from the optical path conversion mirror 95a provided in a second end portion of the core 95 are converted by a corresponding one of the above-mentioned convex lens portions 96a, and are emitted toward the light-receiving element 32 while being converted. Such a converging action of the above-mentioned convex lens portions 96a reduces the coupling loss of the light beams L. In Fig. 8, the reference numeral 94 designates an under cladding layer.

In Patent Documents 1 to 3 described above, however, the formation of the optical path conversion mirrors (inclined surfaces) 85a and 95a involves the need to cut the opposite end portions of the optical waveguide with a rotary blade and the like to result in poor production efficiency. Additionally, when the optical path conversion mirrors 85a and 95a are formed by cutting with the rotary blade and the like, variations are liable to occur in the accuracies of the cutting angle (the angle of the inclined surfaces), the flatness of the cut surfaces (the inclined surfaces) and the like. Insufficient accuracy of the optical path conversion mirrors 85a and 95a gives rise to improper optical path conversion to result in the increase in the coupling loss of the light beams L. Further, in Patent Documents 2 and 3 described above, the formation of the convex lens portions 96a requires the accuracy of the positioning thereof relative to the optical path conversion mirrors 95a. It is therefore difficult to form the convex lens portions 96a.

JP-A-2001/272565 describes a method for forming an optical waveguide, wherein a forming mold having plural opening parts is arranged on a clad layer formed on a substrate. The openingparts of the formingmoldare opened in a nearly rectangular parallelepiped shape, and inclined parts formed so as to incline at a prescribed inclined angle along a light propagating direction are provided at both end parts. After core layer forming material is poured into the opening parts to fill it, core forming material is hardened by irradiating the material with light from the upper side of the substrate. Further, the clad layer is formed after the forming mold is removed from the substrate. Thus, the light reflecting mirror forming the prescribed inclined angle to the light propagating direction is formed at both end parts of the core layer composing the optical waveguide.

JP-A-2003/207661 describes an optical waveguide device, wherein a waveguide is buried in a clad substrate by injection molding. The waveguide is bent halfway at an about 90° angle and an air clad layer is formed at its outside corner part by recessing the clad substrate. This air clad layer is molded simultaneously with the molding of the clad substrate.

A waveguide with integrated lenses is described in US-A1-2004/0120672. EP-A1-1.811823 describes a multilayer printed wiring board. An electric-optical circuit carrier and a method for the production thereof are described in WO-A2-03/062876. Finally, JP-A-2006/078607 describes a method for manufacturing an optical connection device and a corresponding optical connection device.

### DISCLOSURE OF THE INVENTION

In view of the foregoing, it is an object of the present invention to provide a manufacturing method of an optical waveguide module which is capable of forming a light reflecting portion with stabilized accuracy and which is good in production efficiency.

### [Means for Solving the Problems]

To accomplish the above-mentioned object, a manufacturing method of an optical waveguide module according to the present invention is a method of manufacturing an optical waveguide module with the features of claim 1.

In the manufacturing method of the optical waveguide module according to the present invention, the reflective portion of the over cladding layer is formed at the same time that the over cladding layer of the optical waveguide is formed by the die-molding process. This allows the formation of the over cladding layer with a stabilized configuration (without variations). Also, the reflective portion provided in the end portion of the over cladding layer is formed with stabilized accuracy. This enables the manufactured optical waveguide module to achieve the proper reflection of the light beams (optical path conversion) from the above-mentioned reflective portion during the propagation of the light beams between the core and the optical element through the above-mentioned reflective portion to reduce the coupling loss of the light beams. The formation of the above-mentioned reflective portion at the same time as the over cladding layer by the die-molding process eliminates the step of cutting with a rotary blade and the like [the step of forming an optical path conversion mirror portion (an inclined surface) of the prior art] for the formation of the reflective portion. This improves the production efficiency of the optical waveguide to consequently improve the production efficiency of the optical waveguide module.

In particular, the step of forming the end portion of the above-mentioned over cladding layer so as to serve as the reflective portion is the step of forming the end portion of the over cladding layer itself into a curved surface in the form of an arch in section, the reflection at the above-mentioned reflective portion is the reflection at a concavely curved surface in the manufactured optical waveguide module. This enables the light beams reflected from the above-mentionedreflective portion to converge. Thus, the propagation of the light beams between an end portion of the core and the optical element through the above-mentioned reflective portion is accomplished, with the light beams converged. Therefore, the coupling loss of the light beams is further reduced.

Further, the step of forming the end portion of the above-mentioned over cladding layer so as to serve as the reflective portion includes the step of forming the end portion of the over cladding layer itself into the curved surface in the form of the arch in section, and the step of forming a metal film on the formed curved surface, the above-mentioned metal film increases the reflectance of the reflective portion for the light beams in the manufactured optical waveguide module, to accordingly enhance the efficiency of the propagation of the light beams.

### Brief Description of Drawings

Figs. 1A to 1D are illustrations schematically showing a manufacturing method of an optical waveguide module according to a first embodiment lying outside the scope of the present invention.
Figs. 2A to 2C are illustrations schematically showing the manufacturing method of the above-mentioned optical waveguide module according to the first embodiment.
Fig. 3 is a sectional view schematically showing the above-mentioned optical waveguide module.
Fig. 4 is an illustration schematically showing the manufacturing method of the optical waveguide module according to a second embodiment also lying outside the scope of the present invention.
Figs. 5A to 5D are illustrations schematically showing the manufacturing method of the optical waveguide module according to a third embodiment that is lying within the scope of the present invention.
Figs. 6A and 6B are illustrations schematically showing the step of forming an over cladding layer in the manufacturing method of the optical waveguide module according to a fourth embodiment lying outside the scope of the present invention.
Fig. 7 is an illustration schematically showing a prior art optical waveguide module.
Fig. 8 is a sectional view schematically showing another prior art optical waveguide module.

### DETAILED DESCRIPTION

Embodiments according to the present invention will now be described in detail with reference to the drawings.

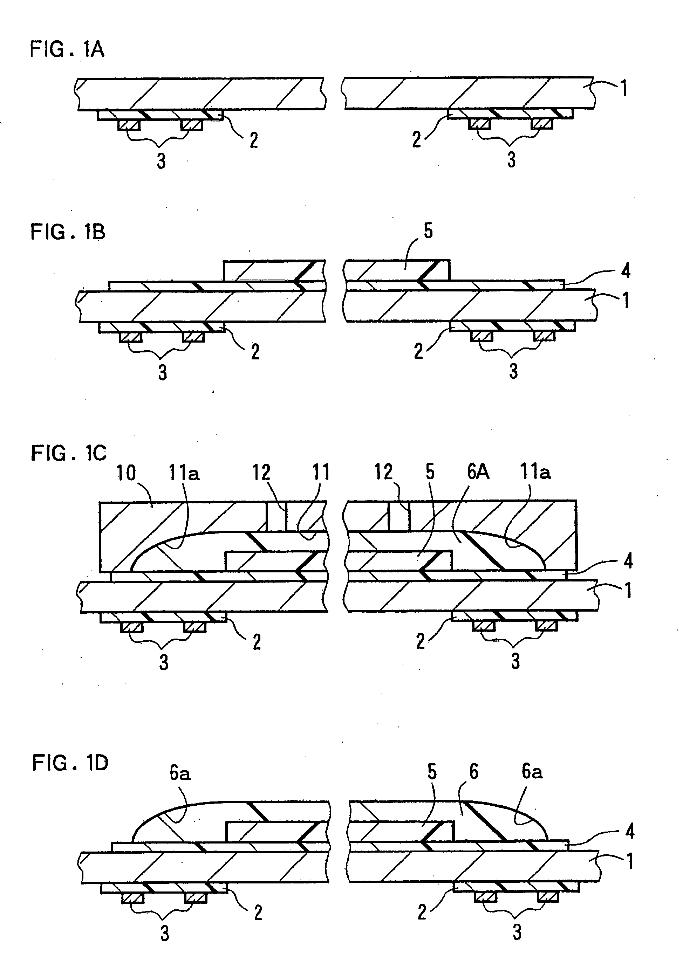

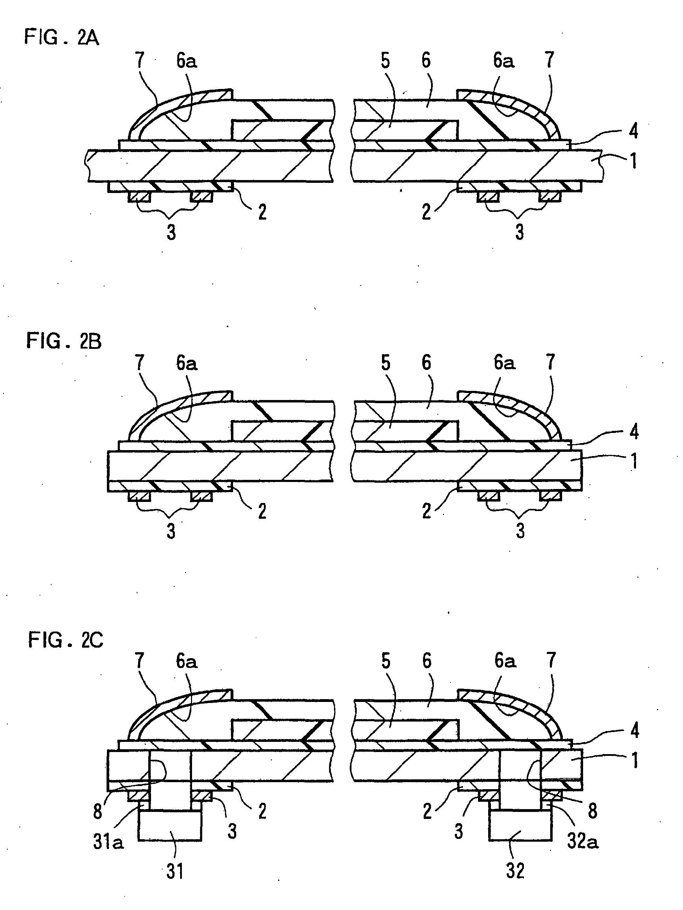

Figs. 1A to 1D and Figs. 2A to 2C show a manufacturing method of an optical waveguide module according to a first embodiment lying outside the scope of the present invention. In this embodiment, as shown in Fig. 1A, an insulation layer 2 is initially formed in a predetermined pattern in a predetermined position of the lower surface of a stainless steel substrate 1, and thereafter an electrical interconnect line 3 is formed in a predetermined pattern on the surface of the insulation layer 2. Next, as shown in Fig. 1B, an under cladding layer 4 and a core 5 are formed in a stacked relation in the order named in a predetermined pattern in a predetermined position of the upper surface of the above-mentioned stainless steel substrate 1. Then, as shown in Figs. 1C and 1D, a molding die 10 for the formation of an over cladding layer 6 is used for die-molding. This molding die 10 has a die surface including approximately quarter-spherical surfaces (opposite end portions 11a of a recessed portion 11) for the formation of reflective portions 6a and formed on opposite ends thereof, the approximately quarter-spherical surfaces being obtained by dividing a hollow sphere into approximately quarters. The over cladding layer 6 is formed so as to cover the above-mentioned core 5 by a die-molding process using this molding die 10. This produces an optical waveguide composed of the above-mentioned under cladding layer 4, the core 5 and the over cladding layer 6. In this embodiment, the opposite end portion of the above-mentioned over cladding layer 6 are provided in the form of approximately quarter-spherical surfaces (approximately quadrantal in section), and the approximately quarter-spherical surfaces (curved surfaces in the form of an arch in section) serve as the reflective portions 6a. The present embodiment is capable of thus forming the over cladding layer 6 having the reflective portions 6a by the die-molding process to thereby improve the production efficiency of the optical waveguide, accordingly improving the production efficiency of the optical waveguide module.

Further, according to this embodiment, a metal film 7 is formed on the above-mentioned approximately quarter-spherical surfaces by plating or vapor deposition, as shown in Fig. 2A. Next, as shown in Fig. 2B, a predetermined region including the above-mentioned optical waveguide is die-cut together with the above-mentioned stainless steel substrate 1 and the like. Then, as shown in Fig. 2C, through holes 8 are formed by laser beam machining and the like in portions of the insulation layer 2 and portions of the stainless steel substrate 1 corresponding to the reflective portions 6a provided in the opposite end portions of the above-mentioned optical waveguide. Thereafter, a light-emitting element 31 and a light-receiving element 32 are mounted (attached) so as to cover the bottoms of the through holes 8, respectively. This mounting is accomplished by connecting electrodes 31a and 32a of the above-mentioned light-emitting element 31 and light-receiving element 32 to predetermined positions of the above-mentioned electrical interconnect line 3 (pads formed in portions of the electrical interconnect line 3). In this manner, an optical waveguide module is manufactured.

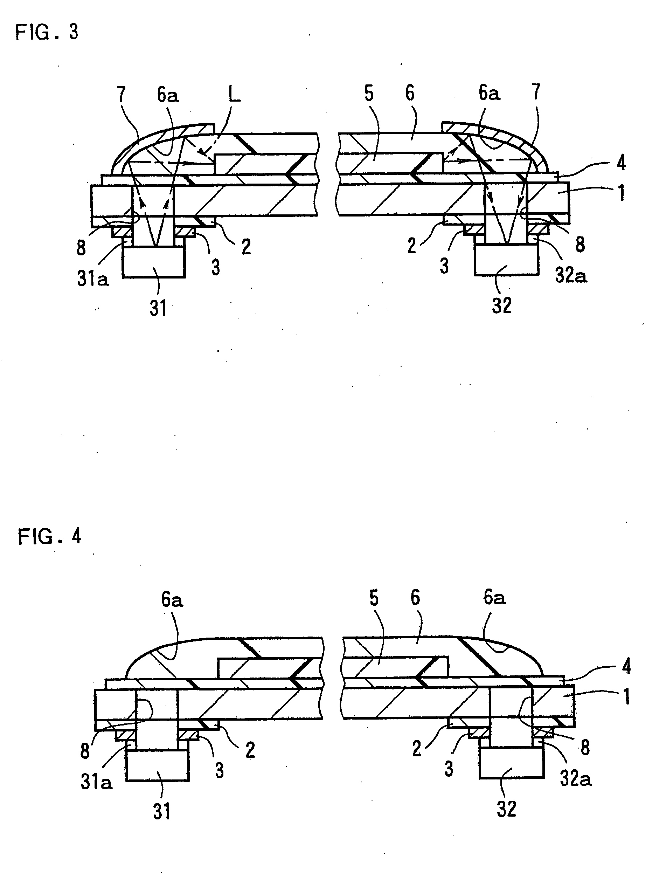

In this optical waveguide module, the above-mentioned light-emitting element 31 and light-receiving element 32 are mounted on the back side of the optical waveguide in association with the end portions of the above-mentioned optical waveguide, and the reflective portions 6a formed in the end portions of the above-mentioned optical waveguide reflect light beams to achieve light propagation between the core 5 and the light-emitting and light-receiving elements 31 and 32. Specifically, in the above-mentioned optical waveguide module, as shown in Fig. 3, the above-mentioned light-emitting element 31 is mounted on the back side (the underside in Fig. 3) of a first end portion (a left-hand end portion in Fig. 3) of the optical waveguide, and the above-mentioned light-receiving element 32 is mounted on the back side of a second end portion (a right-hand end portion in Fig. 3) of the optical waveguide. The above-mentioned light-emitting element 31 is an optical element for emitting light beams L toward one of the reflective portions 6a which is provided in a first end portion of the over cladding layer 6. The light beams L emitted from the light-emitting element 31 pass through one of the through holes 8 of the above-mentioned stainless steel substrate 1, pass through the under cladding layer 4 in the first end portion of the optical waveguide, and enter the first end portion of the over cladding layer 6. Subsequently, the light beams L are reflected from the reflective portion 6a provided in the first end portion of the over cladding layer 6, and enter the core 5 through a first end surface of the core 5. The light beams L are propagated in the core 5 to a second end surface of the core 5, and emitted from the second end surface of the core 5. Subsequently, the light beams L are reflected from the other reflective portion 6a provided in a second end portion of the over cladding layer 6, pass through the under cladding layer 4, and are emitted from the optical waveguide. After passing through the other through hole 8 of the above-mentioned substrate 1, the light beams L are received by the light-receiving element 32. During such propagation of the light beams L, the reflection at the reflective portions 6a provided in the above-mentioned opposite end portions is the reflection at concavely curved surfaces (the above-mentioned approximately quarter-spherical surfaces) in this embodiment. This causes the light beams L reflected from the above-mentioned reflective portions 6a to converge, thereby further reducing the coupling loss of the light beams.

The manufacturing method of the above-mentioned optical waveguide module will be described in further detail. The thickness of the above-mentioned stainless steel substrate 1 with reference to Fig. 1A is typically in the range of 20 to 200 µm.

Examples of a material for the formation of the above-mentioned insulation layer 2 with reference to Fig. 1A include photosensitive resins such as photosensitive polyimide resins, photosensitive epoxy resins, and the like. The formation of the above-mentioned insulation layer 2 is as follows. First, such a photosensitive resin as mentioned above is applied to a predetermined position of the lower surface (which is positioned to face upward during the formation of the insulation layer 2) of the above-mentioned stainless steel substrate 1 to form a photosensitive resin layer. Thereafter, the above-mentioned photosensitive resin layer is exposed to irradiation light through a photomask formed with an opening pattern corresponding to the pattern of the insulation layer 2. Next, development is performed using a developing solution to dissolve away an unexposed portion, thereby forming the remaining photosensitive resin layer into the pattern of the insulation layer 2. Thereafter, a heating treatment is performed to remove the developing solution in the remaining photosensitive resin layer. Thus, the above-mentioned remaining photosensitive resin layer is formed into the insulation layer 2. The thickness of the insulation layer 2 is typically in the range of 5 to 15 µm.

The formation of the above-mentioned electrical interconnect line 3 with reference to Fig. 1A is as follows. For example, a metal layer (for example, having a thickness on the order of 600 to 2600 Å) is initially formed on the surface (which is positioned to face upward during the formation of the electrical interconnect line 3) of the above-mentioned insulation layer 2 by sputtering, electroless plating or the like. Next, a dry film resist is affixed to the surface of the metal layer. Thereafter, groove portions in the pattern of the electrical interconnect line 3 are formed in the above-mentioned dry film resist by photolithography so that surface portions of the above-mentioned metal layer are exposed or uncovered at the bottoms of the groove portions. Next, electroplating is performed to form an electroplated layer (for example, having a thickness on the order of 5 to 20 µm) in a stacked manner on the surface portions of the above-mentioned metal layer exposed or uncovered at the bottoms of the above-mentioned groove portions. Then, the above-mentioned dry film resist is stripped away using an aqueous sodium hydroxide solution and the like. Thereafter, a metal layer portion on which the above-mentioned electroplated layer is not formed is removed by soft etching, so that a laminate of the remaining electroplated layer and the underlying metal layer is formed into the electrical interconnect line 3.

Examples of a material for the formation of the above-mentioned under cladding layer 4 with reference to Fig. 1B include photosensitive resins such as photosensitive polyimide resins, photosensitive epoxy resins, and the like. The formation of the above-mentioned under cladding layer 4 is as follows. First, a varnish prepared by dissolving a photosensitive resin for the formation of the above-mentioned under cladding layer 4 in a solvent is applied to a predetermined position of the upper surface of the above-mentioned stainless steel substrate 1. A heating treatment (for example, at 50°C to 120°C for approximately 10 to 30 minutes) is performed, as required, to dry the varnish, thereby forming a photosensitive resin layer to be formed into the under cladding layer 4. Next, the above-mentioned photosensitive resin layer is formed into the under cladding layer 4 in a predetermined pattern by photolithography. The thickness of the under cladding layer 4 is typically in the range of 5 to 50 µm.

Examples of a material for the formation of the above-mentioned core 5 with reference to Fig. 1B include photosensitive resins similar to those for the above-mentioned under cladding layer 4. The material for the formation of the core 5 used herein is a material having a refractive index greater than that of the materials for the formation of the above-mentioned under cladding layer 4 and the over cladding layer 6. The adjustment of this refractive index may be made, for example, by adjusting the selection of the types of the materials for the formation of the above-mentioned under cladding layer 4, the core 5 and the over cladding layer 6, and the composition ratio thereof. The formation of the core 5 is as follows. A varnish prepared by dissolving a photosensitive resin for the formation of the above-mentioned core 5 in a solvent is applied to a predetermined position of the surface of the above-mentioned under cladding layer 4. Thereafter, the core 5 in a predetermined pattern is formed by photolithography. The thickness of the core 5 is typically in the range of 5 to 60 µm. The width of the core 5 is typically in the range of 5 to 60 µm.

The formation of the above-mentioned over cladding layer 6 is as follows. After the above-mentioned core 5 is formed, the over cladding layer 6 is formed by a die-molding process, as shown in Figs. 1C and 1D. This is a striking feature of the present embodiment. Specifically, as shown in Fig. 1C, the molding die 10 for use in the above-mentioned die-molding process is formed with the recessed portion 11 having a die surface complementary in shape to the surface of the above-mentioned over cladding layer 6 with reference to Fig. 1D. For the formation of the over cladding layer 6, an opening surface of the recessed portion 11 is brought into intimate contact with the surface of the under cladding layer 4, with the core 5 positioned within the above-mentioned recessed portion 11, whereby a space surrounded by the die surface of the above-mentioned recessed portion 11, the surface of the under cladding layer 4 and the surface of the core 5 is formed as a mold space. The above-mentioned molding die 10 is further formed with an inlet 12 for the injection of a photosensitive resin for the formation of the over cladding layer 6 to be described later therethrough into the above-mentioned mold space, the inlet 12 being in communication with the above-mentioned recessed portion 11. Additionally, in this embodiment, the opposite end portions 11a of the die surface of the above-mentioned recessed portion 11 serve as a die surface for forming the reflective portions 6a of the over cladding layer 6 by transfer. Further, it is necessary that the photosensitive resin for the formation of the over cladding layer 6 which fills the above-mentioned mold space be exposed to irradiation light such as ultraviolet light and the like directed through the above-mentioned molding die 10, which will be described later. For this reason, a molding die made of a material permeable to the irradiation light (for example, a molding die made of quartz) is used as the above-mentioned molding die 10.

Examples of the material for the formation of the above-mentioned over cladding layer 6 include photosensitive resins similar to those for the above-mentioned under cladding layer 4. A photosensitive resin of a solventless type is used. The viscosity of the photosensitive resin is preferably in the range of 100 to 2000 mPa·s so as to enable the photosensitive resin to be injected into the above-mentioned mold space.

The formation of the over cladding layer 6 employs the molding die 10 and the photosensitive resin for the formation of the above-mentioned over cladding layer 6, and is accomplished in a manner to be described below. Specifically, as shown in Fig. 1C, the opening surface of the above-mentioned recessed portion 11 is brought into intimate contact with the surface of the above-mentioned under cladding layer 4 so that the above-mentioned core 5 is positioned within the recessed portion 11 formed with the die surface of the above-mentioned molding die 10. Then, a photosensitive resin (solventless) 6A for the formation of the over cladding layer 6 is injected through the inlet 12 formed in the above-mentioned molding die 10 into the mold space surrounded by the die surface of the above-mentioned recessed portion 11, the surface of the under cladding layer 4 and the surface of the core 5 to fill the above-mentioned mold space with the above-mentioned photosensitive resin 6A. Next, exposure to irradiation light such as ultraviolet light is performed through the above-mentioned molding die 10, and thereafter a heating treatment is performed. This hardens the above-mentioned photosensitive resin 6A to form the over cladding layer 6 having the reflective portions 6a with reference to Fig. 1D. Also, the over cladding layer 6 and the under cladding layer 4, which are made of the photosensitive resins similar to each other, are integrated together at the contact portions thereof. Then, as shown in Fig. 1D, the molding die 10 is removed so that the over cladding layer 6 having the opposite end portions formed as the reflective portions 6a is provided. The thickness of the over cladding layer 6 is typically in the range of 50 to 2000 µm.

Examples of a material for the formation of the metal film 7 with reference to Fig. 2A to be formed on the surface of the above-mentioned reflective portions 6a include nickel, copper, silver, gold, chromium, aluminum, zinc, tin, cobalt, tungsten, platinum, palladium, an alloy material including at least two of these elements, and the like. The formation of the above-mentioned metal film 7 is accomplished, for example, by plating or vapor deposition as mentioned earlier, with portions other than the above-mentioned reflective portions 6a masked with a resist layer (or with only the reflective portions 6a exposed or uncovered). Thereafter, the above-mentioned resist layer is removed. The thickness of the above-mentioned metal film 7 is, for example, in the range of 50 nm to 5 µm.

Then, as mentioned earlier, the predetermined region including the optical waveguide is die-cut together with the above-mentioned stainless steel substrate 1 and the like, as shown in Fig. 2B. Thereafter, as shown in Fig. 2C, the through holes 8 are formed by laser beam machining and the like in the portions of the stainless steel substrate 1 corresponding to the reflective portions 6a provided in the opposite end portions of the above-mentioned optical waveguide. Thereafter, the light-emitting element 31 and the light-receiving element 32 are connected to the electrical interconnect line 3 so as to cover the bottoms of the through holes 8, respectively. Examples of the above-mentioned light-emitting element 31 include a VCSEL (Vertical Cavity Surface Emitting Laser) and the like. Examples of the above-mentioned light-receiving element 32 include a PD (Photo Diode) and the like.

In this manner, the optical waveguide module is manufactured in which the optical waveguide including the under cladding layer 4, the core 5 and the over cladding layer 6 is produced on the upper surface of the stainless steel substrate 1 and in which the insulation layer 2 and the electrical interconnect line 3 are formed on the lower surface of the above-mentioned stainless steel substrate 1, with the light-emitting element 31 and the light-receiving element 32 mounted thereon. In this manufacturing method of the optical waveguide module, the reflective portions 6a provided in the opposite end portions of the over cladding layer 6 are formed by die transfer with stabilized accuracy because the formation of the over cladding layer 6 is accomplished by the die-molding process. Further, the reflective portions 6a are formed at the same time that the over cladding layer 6 is formed. This eliminates the step of cutting the opposite end portions after the formation of the over cladding layer 6 as in the prior art to provide the good production efficiency of the optical waveguide module.

In the above-mentioned embodiment, the reflective portions 6a of the over cladding layer 6 are provided in the form of the approximately quarter-spherical surfaces. However, when the core 5 is wide, the reflective portions 6a may be provided in the form of trough-like surfaces having curved surfaces in the form of an arch (for example, approximately quadrantal) in section to cover the entire width of the core 5.

Further, in the above-mentioned embodiment, the steps from the formation of the insulation layer 2 to the die-cutting may be performed in a continuous manner while unwinding a roll of the stainless steel substrate 1 which is obtained by forming the stainless steel substrate 1 in the form of a strip and then winding the strip-shaped stainless steel substrate 1 in the form of a roll. Alternatively, after the steps are performed in a continuous manner until some intermediate step (for example, the production of the optical waveguide), the stainless steel substrate 1 may be wound in the form of a roll, and the subsequent steps may be performed in a continuous manner while unwinding the roll of the stainless steel substrate 1. The use of such a continuous operation of the steps further improves the production efficiency.

The stainless steel substrate 1 is used as the substrate 1 in the above-mentioned embodiment. However, the substrate 1 may be made of other metal materials, resin materials or the like. When the substrate 1 has insulating properties, the electrical interconnect line 3 may be formed directly on the above-mentioned substrate 1 without the formation of the above-mentioned insulation layer 2. The above-mentioned insulation layer 2 is provided to prevent a short circuit from occurring between the substrate 1 having electrical conductivity such as the above-mentioned metal substrate 1 and the electrical interconnect line 3.

Although the under cladding layer 4 is formed in the above-mentioned embodiment, the core 5 may be formed directly on the upper surface of the substrate 1 such as the stainless steel substrate 1 or the like without the formation of the under cladding layer 4. This is because the upper surface of the above-mentioned substrate 1 functions as a surface for reflecting light beams passing through the interior of the core 5.

Also, in the above-mentioned embodiment, the optical waveguide is produced after the electrical interconnect line 3 is formed, and thereafter the light-emitting element 31 and the light-receiving element 32 are mounted. However, if the over cladding layer 6 is formed by the die-molding process, these steps may be performed in a different order. For example, the light-emitting element 31 and the light-receiving element 32 may be mounted after the electrical interconnect line 3 is formed, following which the optical waveguide is produced.

Fig. 4 shows the manufacturing method of the optical waveguide module according to a second embodiment also lying outside the scope of the present invention. This embodiment is such that the metal film 7 with reference to Figs. 2A to 2C in the above-mentioned first embodiment is not formed. Other parts of this embodiment are similar to those of the above-mentioned first embodiment. Like reference numerals and characters are used to designate parts similar to those of the first embodiment.

In this embodiment, the reflectance of the reflective portions 6a may be decreased because the metal film 7 is not formed. However, a majority of light beams impinging upon the reflective portions 6a are reflected therefrom because the refractive index of the over cladding layer 6 is greater than that of air present outside the above-mentioned reflective portions 6a. Thus, the propagation of the light beams is accomplished properly in a manner similar to that intheabove-mentioned first embodiment. Also in this second embodiment, the over cladding layer 6 is formed by the die-molding process. This forms the reflective portions 6a provided in the opposite end portions of the over cladding layer 6 with stabilized accuracy, and provides the good production efficiency of the optical waveguide module.

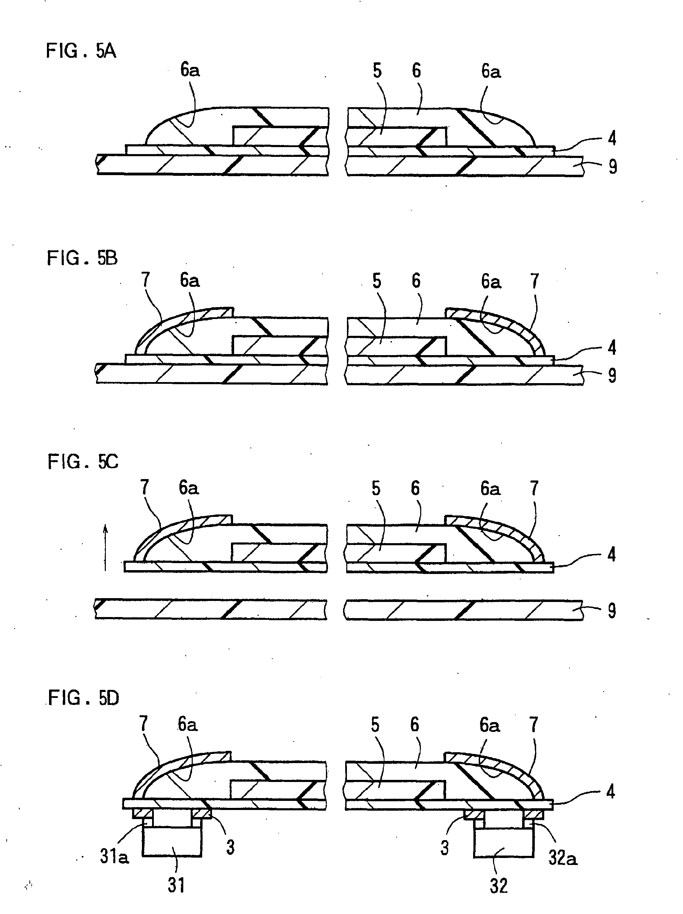

Figs. 5A to 5D show the manufacturing method of the optical waveguide module according to a third embodiment that is lying within the scope of the present invention. This embodiment is such that an optical waveguide module which does not include the substrate 1 such as the stainless steel substrate 1 with reference to Figs. 1A to 1D or the like in the above-mentioned first embodiment is manufactured. Specifically, as shown in Fig. 5A, a base 9 which is a polyethylene terephthalate (PET) film or the like is first prepared, and the under cladding layer 4, the core 5 and the over cladding layer 6 are formed in the order named on a predetermined portion of the base 9 in a manner similar to that in the above-mentioned first embodiment, whereby an optical waveguide is produced. Further, in this embodiment, the metal film 7 is also formed on the surface of the above-mentioned reflective portions 6a by plating or vapor deposition, as shown in Fig. 5B. Then, as shown in Fig. 5C, the optical waveguide is stripped from the above-mentioned base 9. Next, as shown in Fig. 5D, the predetermined electrical interconnect line 3 is formed directly on the lower surface of the under cladding layer 4 of the stripped optical waveguide in a manner similar to that in the above-mentioned first embodiment. Thereafter, the light-emitting element 31 and the light-receiving element 32 are connected to portions of the electrical interconnect line 3 corresponding to the reflective portions 6a provided in the opposite end portions of the above-mentioned optical waveguide. In this manner, the optical waveguide module is manufactured.

Also in this third embodiment, the over cladding layer 6 is formed by the die-molding process. This forms the reflective portions 6a provided in the opposite end portions of the over cladding layer 6 with stabilized accuracy, and provides the good production efficiency of the optical waveguide module.

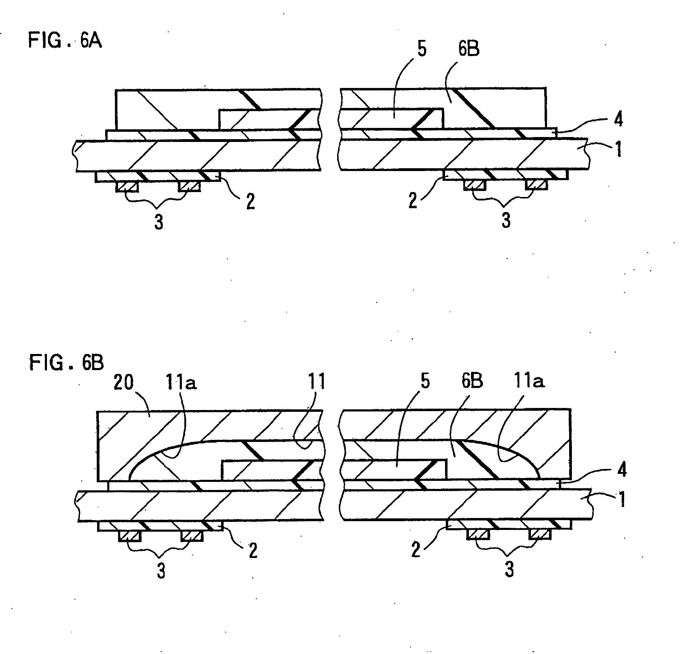

Figs. 6A and 6B show the step of forming the over cladding layer 6 in the manufacturing method of the optical waveguide module according to a fourth embodiment lying outside the scope of the present invention. This embodiment is such that the formation of the over cladding layer 6 in the above-mentioned first embodiment is accomplished by press molding (die-molding). Specifically, after the core 5 is formed with reference to Fig. 1B in the above-mentioned first embodiment, a semi-cured (B-staged) or uncured photosensitive resin layer 6B for the formation of the over cladding layer 6 is formed on the surface of the above-mentioned under cladding layer 4 so as to cover the core 5, as shown in Fig. 6A. Then, as shown in Fig. 6B, a molding die 20 is used to press the photosensitive resin layer 6B, thereby molding the photosensitive resin layer 6B into the shape of the over cladding layer 6. In this state, exposure to irradiation light such as ultraviolet light is performed through the above-mentioned molding die 20, and thereafter a heating treatment is performed. This forms the over cladding layer 6 having the reflective portions 6a. Other parts of this embodiment are similar to those of the above-mentioned first embodiment. Like reference numerals and characters are used to designate parts similar to those of the first embodiment.

In this embodiment, the formation of the above-mentioned semi-cured photosensitive resin layer 6B is accomplished by applying a photosensitive resin (solventless) for the formation of the over cladding layer 6 and then adjusting the exposure of the applied layer to irradiation light and the heating treatment of the applied layer, as appropriate. The above-mentioned uncured photosensitive resin layer 6B is the applied layer of the above-mentioned photosensitive resin (solventless). The molding die 10 with reference to Fig. 1C used in the above-mentioned first embodiment which is not formed with the inlet 12 for the injection of the material is used as the above-mentioned molding die 20.

Also in this fourth embodiment, the over cladding layer 6 is formed by the die-molding process. This forms the reflective portions 6a provided in the opposite end portions of the over cladding layer 6 with stabilized accuracy, and provides the good production efficiency of the optical waveguide module.

The press molding of the over cladding layer 6 in the above-mentioned fourth embodiment may be employed for the formation of the over cladding layer 6 in the above-mentioned third embodiment.

In the above-mentioned embodiments, the reflective portions 6a provided in the opposite end portions of the over cladding layer 6 are in the form of the curved surfaces which are arch-shaped in section. However, the reflective portions 6a may be provided in the form of surfaces inclined at 45 degrees and the like in addition to the curved surfaces which are arch-shaped in section, if the over cladding layer 6 having the above-mentioned reflective portions 6a is formed by the die-molding process and the propagation of light beams is accomplished between an end surface of the core 5 and the light-emitting element 31 or the light-receiving element 32 through the reflective portions 6a.

Next, an example lying outside the scope of the present invention will be described in conjunction with a comparative example.

### Examples

### Material for Formation of Under Cladding Layer and Over Cladding Layer

A material for formation of an under cladding layer and an over cladding layer was prepared by mixing 35 parts by weight of bisphenoxyethanol fluorene glycidyl ether (component A) represented by the following general formula (1), 40 parts by weight of 3',4'-epoxycyclohexylmethyl-3,4-epoxycyclohexane carboxylate which is an alicyclic epoxy resin (CELLOXIDE 2021P manufactured by Daicel Chemical Industries,Ltd.)(Component B), 25 parts by weight of (3',4'-epoxycyclohexane)methyl-3',4'-epoxycyclohexyl-carboxylate(CELLOXIDE 2081 manufactured by Daicel Chemical Industries, Ltd.) (Component C), and 2 parts by weight of a 50% propione carbonate solution of 4,4'-bis[di(*β*-hydroxyethoxy)phenylsulfinio]phenyl-sulfide-bis-hexafluoroantimonate (component D). 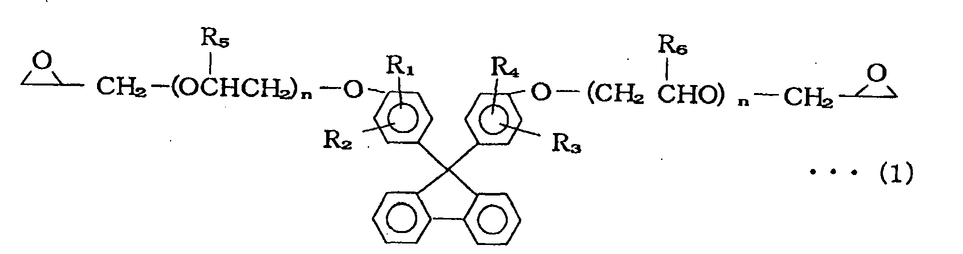 wherein R₁ to R₆ are hydrogen atoms, and n = 1.

### Material for Formation of Core

A material for formation of a core was prepared by dissolving 70 parts by weight of the aforementioned component A, 30 parts by weight of 1,3,3-tris{4-[2-(3-oxetanyl)]butoxyphenyl}butane and one part by weight of the aforementioned component D in ethyl lactate.

### Production of Optical Waveguide for Optical Waveguide Module

The material for the formation of the above-mentioned under cladding layer was applied to the surface of a stainless steel substrate (having a thickness of 50 µm) with an applicator. Thereafter, exposure to light was performed by irradiating the entire surface with ultraviolet light at 2000 mJ/cm². Subsequently, a heating treatment was performed at 100°C for 15 minutes to form the under cladding layer. The thickness of this under cladding layer was 10 µm when measured with a contact-type film thickness meter.

Then, the material for the formation of the core was applied to the surface of the above-mentioned under cladding layer with an applicator. Thereafter, a drying process was performed at 100°C for 5 minutes. Next, a synthetic quartz chrome mask (photomask) formed with an opening pattern identical in shape with a core pattern to be formed was placed over the resulting core material. Then, exposure by the use of irradiation with ultraviolet light at 4000 mJ/cm² was performed by a proximity exposure method from over the mask. Further, a heating treatment was performed at 80°C for 15 minutes. Next, development was carried out using an aqueous solution of γ -butyrolactone to dissolve away an unexposed portion. Thereafter, a heating treatment was performed at 120°C for 15 minutes to form the core. Dimensions of the core in cross section were 50 µm in width x 50 µm in height when measured with an SEM.

Next, the material for the formation of the above-mentioned over cladding layer was applied with an applicator so as to cover the above-mentioned core, and was then pressed using a molding die made of quartz. Exposure by the use of irradiation with ultraviolet light at 2000 mJ/cm² was performed through the molding die. Subsequently, a heating treatment was performed at 120°C for 15 minutes. Thereafter, the molding die was removed, whereby the over cladding layer was formed which had opposite end portions provided in the form of approximately quarter-spherical surfaces and which used the approximately quarter-spherical surfaces as reflecting portions. The radii of curvature of the above-mentioned approximately quarter-spherical surfaces were 540 µm in a first end portion (on a light-emitting element side) and 320 µm in a second end portion (on a light-receiving element side). The thickness of the above-mentioned over cladding layer was 100 µm when measured with a contact-type film thickness meter. In this manner, an optical waveguide for an optical waveguide module was produced.

### Comparative Example

An under cladding layer and a core were formed on the surface of a stainless steel substrate in a manner similar to that described above. Then, the above-mentioned material for the formation of an over cladding layer was applied with an applicator so as to cover the above-mentioned core. Thereafter, a drying process was performed at 100°C for 15 minutes to form a photosensitive resin layer. Next, a synthetic quartz exposure mask formed with an opening pattern identical in shape with the pattern of the over cladding layer was positioned over the photosensitive resin layer. Exposure by the use of irradiation with ultraviolet light at 2000 mJ/cm² was performed by a contact exposure method from over the exposure mask. Thereafter, a heating treatment was performed at 150°C for 60 minutes. Next, development was carried out using an aqueous solution of γ-butyrolactone to dissolve away an unexposed portion. Thereafter, a heating treatment was performed at 100°C for 15 minutes to form the over cladding layer (having a thickness of 100 µm). Thereafter, a rotary blade having an included angle of 90 degrees was lowered from directly above the over cladding layer to cut opposite end portions of an optical waveguide including the above-mentioned under cladding layer, the core and the over cladding layer so as to provide surfaces inclined at 45 degrees, thereby causing the inclined surfaces to serve as reflective portions. In this manner, the optical waveguide for an optical waveguide module was produced.

In Inventive Example mentioned above, the over cladding layer having the reflective portions was formed by the die-molding process. This formed the reflective portions with stabilized accuracy, and provided the good production efficiency of the optical waveguide. In Comparative Example mentioned above, on the other hand, the reflective portions were formed by cutting using the rotary blade after the over cladding layer was formed. This resulted in variations liable to occur in the accuracy of the reflective portions, and provided the poor production efficiency of the optical waveguide.

Although a specific form of embodiment of the instant invention has been described above and illustrated in the accompanying drawings in order to be more clearly understood, the above description is made by way of example and not as a limitation to the scope of the instant invention. It is contemplated that various modifications apparent to one of ordinary skill in the art could be made without departing from the scope of the invention which is to be determined by the following claims.

## Claims

1. Method of manufacturing an optical waveguide module, said optical waveguide module including an optical waveguide having an under cladding layer (4), a core (5) formed on a surface of the under cladding layer (4) and an over cladding layer (6) for covering the core (5) on a front side thereof, an optical element (31, 32) mounted on a back side of the optical waveguide in association with an endportion of said optical waveguide, and a reflective portion (6a) for reflecting light beams (L) to allow the propagation of the light beams (L) between said core (5) and said optical element (31, 32), said method comprising the steps of:
forming an end portion of the over cladding layer (6) corresponding to the end portion of said optical waveguide so as to serve as the reflective portion (6a) at the same time that said over cladding layer (6) is formed by a die-molding process;
forming an electrical interconnect line (3) directly on the back side of the under cladding layer (4) of said optical waveguide; and
connecting said optical element (31, 32) to said electrical interconnect line (3) so that the optical element (31, 32) is mounted on the back side of said optical waveguide.

2. Method of manufacturing an optical waveguide module according to claim 1, wherein the step of forming the end portion of said over cladding layer (6) so as to serve as the reflective portion (6a) is the step of forming the end portion of the over cladding layer (6) itself into a curved surface in the form of an arch in section.

3. Method of manufacturing an optical waveguide module according to claim 2 , wherein said curved surface in the form of the arch in section is a curved surface approximately quadrantal in section.

4. Method of manufacturing an optical waveguide module according to claim 2, wherein the step of forming the end portion of said over cladding layer (6) so as to serve as the reflective portion (6a) includes the step of forming the end portion of the over cladding layer (6) itself into the curved surface in the form of the arch in section, and the step of forming a metal film (7) on the formed curved surface.

5. Method of manufacturing an optical waveguide module according to any one of claims 1 to 4, wherein said optical element (31, 32) is a light-emitting element (31) for emitting light beams (L) toward said core (5), and said reflective portion (6a) reflects the light beams (L) emitted from said light-emitting element (31).

6. Method of manufacturing an optical waveguide module according to any one of claims 1 to 4, wherein saidoptical element (31, 32) is alight-receivingelement (32) for receiving light beams (L) directed from said core (5), and said reflective portion (6a) reflects the light beams (L) directed from said core (5).

## Patentansprüche

1. Verfahren zur Herstellung eines Lichtwellenleitermoduls, wobei das Lichtwellenleitermodul einen Lichtwellenleiter umfasst, der Folgendes umfasst: eine Unterplattierungsschicht (4), einen Kern (5), der auf einer Oberfläche der Unterplattierungsschicht (4) ausgebildet ist, und eine Überplattierungsschicht (6) zum Bedecken des Kerns (5) auf seiner Vorderseite, ein optisches Element (31, 32), das auf einer Rückseite des Lichtwellenleiters in Verbindung mit einem Endabschnitt des Lichtwellenleiters montiert ist, und einen Reflexionsabschnitt (6a) zum Reflektieren von Lichtstrahlen (L), um die Ausbreitung der Lichtstrahlen (L) zwischen dem Kern (5) und dem optischen Element (31, 32) zu ermöglichen, wobei das Verfahren folgende Schritte umfasst:
- Ausbilden eines Endabschnitts der Überplattierungsschicht (6), der dem Endabschnitt des Lichtwellenleiters entspricht, so dass er als der Reflexionsabschnitt (6a) dienen kann, zur selben Zeit, da die Überplattierungsschicht (6) durch einen Gesenkformungsprozess gebildet wird,
- Ausbilden einer elektrischen Interconnect-Leitung (3) direkt auf der Rückseite der Unterplattierungsschicht (4) des Lichtwellenleiters; und
- Verbinden des optischen Elements (31, 32) mit der elektrischen Interconnect-Leitung (3), so dass das optische Element (31, 32) auf der Rückseite des Lichtwellenleiters montiert ist.

2. Verfahren zur Herstellung eines Lichtwellenleitermoduls nach Anspruch 1, wobei der Schritt des Ausbildens des Endabschnitts der Überplattierungsschicht (6), um als der Reflexionsabschnitt (6a) zu dienen, der Schritt des Ausbildens des Endabschnitts der Überplattierungsschicht (6) selbst zu einer gekrümmten Oberfläche in Form eines geschnittenen Bogens ist.

3. Verfahren zur Herstellung eines Lichtwellenleitermoduls nach Anspruch 2, wobei die gekrümmte Oberfläche in Form des geschnittenen Bogens eine gekrümmte Oberfläche mit ungefähr quadrantalem Schnitt ist.

4. Verfahren zur Herstellung eines Lichtwellenleitermoduls nach Anspruch 2, wobei der Schritt des Ausbildens des Endabschnitts der Überplattierungsschicht (6), um als der Reflexionsabschnitt (6a) zu dienen, den Schritt des Ausbildens des Endabschnitts der Überplattierungsschicht (6) selbst zu der gekrümmten Oberfläche in Form des geschnittenen Bogens und des Schritt des Ausbildens einer Metallfolie (7) auf der gebildeten gekrümmten Oberfläche enthält.

5. Verfahren zur Herstellung eines Lichtwellenleitermoduls nach einem der Ansprüche 1 bis 4, wobei das optische Element (31, 32) ein lichtaussendendes Element (31) zum Aussenden von Lichtstrahlen (L) in Richtung des Kerns (5) ist und der Reflexionsabschnitt (6a) die von dem lichtaussendenden Element (31) ausgesendeten Lichtstrahlen (L) reflektiert.

6. Verfahren zur Herstellung eines Lichtwellenleitermoduls nach einem der Ansprüche 1 bis 4, wobei das optische Element (31, 32) ein lichtempfangendes Element (32) zum Empfangen der von dem Kern (5) kommenden Lichtstrahlen (L) ist und der Reflexionsabschnitt (6a) die von dem Kern (5) kommenden Lichtstrahlen (L) reflektiert.

## Revendications

1. Procédé de fabrication d'un module de guide d'ondes optique, ledit module de guide d'ondes optique comprenant un guide d'ondes optique comportant une couche de gainage inférieure (4), une âme (5) formée sur une surface de la couche de gainage inférieure (4) et une couche de gainage supérieure (6) pour recouvrir l'âme (5) sur une face avant de celui-ci, un élément optique (31, 32) monté sur une face arrière du guide d'ondes optique en association avec une partie d'extrémité dudit guide d'ondes optique, et une partie réfléchissante (6a) pour réfléchir des faisceaux lumineux (L) afin de permettre la propagation des faisceaux lumineux (L) entre ladite âme (5) et ledit élément optique (31, 32), ledit procédé comprenant les étapes consistant à :
- former une partie d'extrémité de la couche de gainage supérieure (6) correspondant à la partie d'extrémité dudit guide d'ondes optique de manière à servir de partie réfléchissante (6a) en même temps que ladite couche de gainage supérieure (6) est formée par un processus de moulage à la presse,
- former une ligne d'interconnexion électrique (3) directement sur la face arrière de la couche de gainage inférieure (4) dudit guide d'ondes optique ; et
- connecter ledit élément optique (31, 32) à ladite ligne d'interconnexion électrique (3) de sorte que l'élément optique (31, 32) est monté sur la face arrière dudit guide d'ondes optique.

2. Procédé de fabrication d'un module de guide d'ondes optique selon la revendication 1, dans lequel l'étape de formation de la partie d'extrémité de ladite couche de gainage supérieure (6) de façon à servir de partie réfléchissante (6a) est l'étape de formation de la partie d'extrémité de la couche de gainage supérieure (6) elle-même en une surface incurvée en forme d'arc en coupe.

3. Procédé de fabrication d'un module de guide d'ondes optique selon la revendication 2, dans lequel ladite surface incurvée en forme d'arc en coupe est une surface incurvée sensiblement quandrantale en coupe.

4. Procédé de fabrication d'un module de guide d'ondes optique selon la revendication 2, dans lequel l'étape de formation de la partie d'extrémité de ladite couche de gainage supérieure (6) de façon à servir de partie réfléchissante (6a) comprend l'étape de formation de partie d'extrémité de la couche de gainage supérieure (6) elle-même en la surface incurvée en forme d'arc en coupe, et l'étape de formation d'un film métallique (7) sur la surface courbe formée.

5. Procédé de fabrication d'un module de guide d'ondes optique selon l'une quelconque des revendications 1 à 4, dans lequel ledit élément optique (31, 32) est un élément émetteur de lumière (31) pour émettre des faisceaux lumineux (L) en direction de ladite âme (5), et ladite partie réfléchissante (6a) réfléchit les faisceaux lumineux (L) émis par ledit élément émetteur de lumière (31).

6. Procédé de fabrication d'un module de guide d'ondes optique selon l'une quelconque des-revendications 1 à 4, dans lequel ledit élément optique (31, 32) est un élément récepteur de lumière (32) pour recevoir des faisceaux lumineux (L) dirigés à partir de ladite âme (5) , et ladite partie réfléchissante (6a) réfléchit les faisceaux lumineux (L) dirigés à partir de ladite âme (5).
